# FASCICULE DE BREVET EUROPEEN

(11) **EP 0 862 701 B1**
(45) Date de publication et mention de la délivrance du brevet: **23.10.2002**
(21) Numéro de dépôt: 97942086.6
(22) Date de dépôt: 25.09.1997
(51) Int. Cl.: F16D 25/08

(54) **CONNECTEUR HYDRAULIQUE POUR COMMANDE HYDRAULIQUE D'EMBRAYAGE**
HYDRAULISCHER VERBINDER FÜR HYDRAULISCHE KUPPLUNGSBETÄTIGUNG
HYDRAULIC CONNECTOR FOR HYDRAULIC CLUTCH CONTROL

(30) Priorité: 26.09.1996 FR 9611841
(43) Date de publication de la demande: 09.09.1998
(73) Titulaire: VALEO, 75017 Paris (FR)
(72) Inventeur: DEQUESNES, Laurent, F-80800 Pouilloy (FR)
(74) Mandataire: Gamonal, Didier
(86) Numéro de dépôt international: FR9701681
(87) Numéro de publication internationale: WO98013613

(56) Documents cités:
- DE-A- 2 815 971
- DE-A- 4 412 734
- FR-A- 2 194 263

## Description

La présente invention concerne les connecteurs hydrauliques, pour commande hydraulique d'embrayage du type comportant une entrée d'alimentation d'une chambre de commande qui est montée à l'intérieur d'un capot tel que le capot de carter de la boîte de vitesses d'un véhicule automobile, ledit connecteur comportant, d'une part, une plaque pour sa fixation par des organes de fixation sur le capot et pour le recouvrement au moins en majeure partie d'un trou, que présente le capot pour accès à l'entrée d'alimentation et qui est délimité par un bord arrière, et d'autre part, un conduit d'alimentation porté par ladite plaque pour raccordement de l'entrée d'alimentation de ladite commande à un émetteur pilotant celle-ci.

Un tel connecteur est décrit dans le document FR-A-2 698 931.

La commande est dite par simplicité commande hydraulique d'embrayage sachant que sa chambre de commande peut être alimentée par un fluide de nature liquide, tel que de l'huile, ou gazeuse, tel que de l'air comprimé.

Ainsi que l'on sait un embrayage est disposé en aval d'un arbre menant pour contrôler l'entraînement d'un arbre mené.

L'embrayage comporte usuellement, d'une part, côté arbre menant, un bloc primaire comprenant un volant d'entraînement en rotation, éventuellement divisé, un moyeu solidarisé de manière débrayable à ce volant et un dispositif débrayeur propre à commander le débrayage du moyeu avec le volant lorsqu'il est l'objet d'une action axiale appropriée et, d'autre part, côté arbre mené, un bloc secondaire comprenant une butée de débrayage manoeuvrée par une commande pour agir axialement sur le dispositif débrayeur de l'embrayage consistant usuellement en un diaphragme en variante en des leviers de débrayage agissant sur des ressorts hélicoïdaux.

Pour plus de précisions on se reportera par exemple à la demande FR-A-2 698 931 susmentionnée sachant que le plus souvent le bloc primaire comporte un mécanisme d'embrayage rapporté sur le volant d'entraînement après mise en place d'un disque d'embrayage comportant des garnitures de friction accouplées de manière rigide ou élastique au moyeu propre à être lié en rotation à l'arbre d'entrée de la boîte de vitesses dans le cadre d'une application à un véhicule automobile, le volant étant alors propre à être fixé dans ce cas sur le vilebrequin du moteur à combustion interne du véhicule.

Le mécanisme d'embrayage comporte un couvercle propre à être fixé sur le volant d'entraînement formant plateau de réaction. Le diaphragme ou les ressorts hélicoïdaux prennent appui sur le couvercle pour action sur un plateau de pression lié en rotation au couvercle et ce avec mobilité axiale, usuellement par des languettes élastiques.

Ainsi le diaphragme (la partie rondelle Belleville de celui-ci) ou les ressorts hélicoïdaux sollicitent le plateau de pression en direction du plateau de réaction pour serrer les garnitures de friction entre lesdits plateaux.

L'embrayage est donc normalement engagé. Pour désengager celui-ci il faut agir axialement en traction ou en poussée, à l'aide d'une butée de débrayage, sur le dispositif débrayeur pour faire cesser l'action du diaphragme ou des ressorts hélicoïdaux et libérer les garnitures de friction.

Cette butée de débrayage est manoeuvrée ici par la commande hydraulique d'embrayage comportant deux parties en relation de cylindre-piston à savoir une partie fixe délimitant une cavité et une partie mobile consistant en un piston mobile à l'intérieur de ladite cavité pour définir avec celle-ci une chambre de commande à volume variable.

La partie fixe comporte une entrée d'alimentation pour alimenter la cavité et donc la chambre de commande. Cette commande étant montée à l'intérieur d'un capot. Le rôle du connecteur hydraulique est de permettre la traversée du capot afin de relier de l'extérieur la commande hydraulique d'embrayage, formant récepteur, à une canalisation d'alimentation venant d'un émetteur.

Pour ces réalisations il est usuel d'assurer, d'une part, un montage individuel du bloc primaire à partir du volant d'entraînement et, d'autre part, un montage individuel du bloc secondaire à partir par exemple du carter de la boîte de vitesses, puis d'assurer l'assemblage de ces blocs en rapprochant ceux-ci axialement l'un de l'autre. Il importe donc que ces montages soient les plus rapides et les plus simples possible afin de diminuer notamment les temps de montage sur chaîne de fabrication.

Dans le document FR-A-2 698 931 la plaque est fixée à un couvercle lui-même fixé au capot et ceci à l'aide d'organes de fixation.

Le montage n'est donc pas aussi facile, économique et rapide que souhaité et nécessite de pratiquer des trous filetés dans le capot.

Le document FR-A-2.194.263, conforme au préambule de la revendication 1, décrit un connecteur hydraulique, pour commande hydraulique d'embrayage du type comportant une entrée d'alimentation d'une chambre de commande qui est montée à l'intérieur d'un capot, ledit connecteur comportant :
- d'une part, une plaque pour sa fixation par des organes de fixation sur le capot et pour le recouvrement au moins en majeure partie d'un trou que présente le capot pour accès à l'entrée d'alimentation et qui est délimité par un bord arrière ; et
- d'autre part, un conduit d'alimentation porté par ladite plaque pour raccordement de l'entrée d'alimentation de ladite commande à un émetteur pilotant celle-ci, les organes de fixation comportant une agrafe déformable que porte la plaque pour former un sous-ensemble et qui est dotée d'une portion d'accrochage pour coopération avec le bord arrière du trou du capot.

Dans ce document, la plaque se confond avec l'agrafe qui ne peut être montée, grâce à ses propriétés élastiques, que par une manipulation fastidieuse pour sa mise en place dans l'échancrure, de sorte que son montage n'est pas aussi aisé que désiré.

La présente invention a pour objet de pallier ces inconvénients de manière simple, facile, économique et rapide.

C'est donc un but de l'invention de créer un connecteur hydraulique dont le montage sur le capot est simple, facile, économique et rapide.

C'est encore un but de l'invention de simplifier le capot et de réduire les coûts.

Suivant l'invention un connecteur du type sus-indiqué est caractérisé en ce que la plaque présente, pour l'assemblage de l'agrafe, une échancrure qui est délimitée par un contour, tel qu'un contour de forme rectangulaire.

Cette agrafe, formant un clip, peut être élastiquement déformable ou plastiquement déformable et favorise la ventilation de l'intérieur du capot.

Grâce à l'invention il n'y a pas besoin de prévoir de couvercle, en sorte que l'on réduit les coûts et le nombre de pièces. Le montage ne fait pas appel à un outil, ni à des vis de fixation, et est donc économique.

La plaque avec son agrafe peu coûteuse forme un sous-ensemble manipulable, transportable et imperdable.

La déformabilité de l'agrafe facilite le montage de la portion d'accrochage sur le capot. Cette agrafe peut s'escamoter aisément.

Ainsi, grâce à l'invention, le montage de la plaque se fait directement sur le capot grâce à l'agrafe et ce de manière rapide, facile, sans outil et sans avoir à procéder à un vissage nécessitant de tarauder le capot, en sorte que celui-ci est simplifié.

Avantageusement la plaque est solidaire du conduit d'alimentation en étant de préférence d'un seul tenant avec le conduit d'alimentation traversant la plaque. Cette disposition permet de simplifier encore le connecteur et favorise le montage rapide de celui-ci sur l'entrée d'alimentation de la commande hydraulique et sur la canalisation venant de l'émetteur.

Cette entrée peut avoir une tête pénétrante et le conduit d'alimentation une extrémité associée épanouie.

Ainsi on peut emmancher le conduit d'alimentation, formant tuyau, sur l'entrée d'alimentation et procéder à un assemblage rapide par brochage à l'aide d'une pince élastique.

Plus précisément l'entrée d'alimentation peut comporter une gorge pour recevoir la pince globalement en forme de U engagée dans des ouvertures pratiquées dans l'extrémité du conduit d'alimentation.

Ainsi qu'on l'aura compris le montage du bloc secondaire avec son connecteur sur, par exemple, le carter de la boîte de vitesses est rapide, économique, simple et facile.

Selon une caractéristique l'agrafe est portée par la plaque à la faveur d'une échancrure de celle-ci, ladite agrafe recouvrant globalement ladite échancrure. Cette échancrure est délimitée par un contour, tel qu'un contour ayant globalement une forme rectangulaire. En variante, elle a une forme borgne, l'un des côtés latéraux du rectangle étant ouvert.

Quoi qu'il en soit l'agrafe présente une pince d'assemblage de ladite agrafe avec le bord latéral de l'échancrure. Cette pince a par exemple globalement la forme d'un oméga. L'agrafe comporte une anse reliant cette pince d'assemblage à la portion d'accrochage de l'agrafe sur le bord de l'ouverture du capot.

La portion d'accrochage comporte avantageusement une pince de fixation favorisant l'endiquetage de l'agrafe sur le capot.

Avantageusement la plaque comporte un épaulement globalement en forme de « V » inversé pour coopérer avec une portion du bord avant du trou du capot et retenir ladite plaque. Cette plaque comporte également un bord pour coopérer à contact intime avec une paroi de carter dont est issu le capot afin de centrer la plaque.

Ce bord dirigé vers l'intérieur permet, par coopération avec le bord de l'ouverture du capot, d'immobiliser en rotation la plaque. Il forme également une butée axiale.

Avantageusement la plaque avec son conduit d'alimentation est en matière moulable et ledit conduit s'étend à l'extérieur (de l'autre côté de la plaque) pour présenter, de moulage, une purge permettant de purger de l'extérieur du capot la commande, et ce de manière aisée contrairement à une solution usuelle du type de celle décrite dans le document DE-A-2 815 971. Cela permet également de réduire le nombre de conduits.

L'anse de l'agrafe favorise la ventilation et peut être montée à l'intérieur ou à l'extérieur du capot suivant les applications et la place disponible. Cette anse rend déformable l'agrafe et facilite l'accrochage sur le capot en appuyant sur ladite anse.

Suivant la forme du capot il est possible de former par avance un sous-ensemble commande hydraulique d'embrayage-connecteur, d'introduire celui-ci à l'intérieur du capot et ensuite de procéder aux fixations.

La description qui va suivre illustre l'invention en regard des dessins annexés dans lesquels :
- la figure 1 est globalement une demi-vue en coupe axiale du bloc secondaire de l'embrayage avec le connecteur selon l'invention, le volant d'entraînement du bloc primaire étant représenté, mais pas les autres constituants venant se fixer sur celui-ci ;
- la figure 2 est une vue selon la flèche 2 de la figure 1 ;
- la figure 3 est une vue selon la flèche 2 de la figure 1 sans représentation du capot et du carter ;
- la figure 4 est une vue en coupe axiale du connecteur hydraulique selon l'invention avec représentation partielle de l'entrée d'alimentation de la commande hydraulique ;
- la figure 5 est une vue analogue à la figure 1 pour un autre exemple de réalisation.

Ces figures illustrent l'invention dans le cadre d'une application à un embrayage de véhicule automobile dont le fonctionnement sera décrit ci-après pour mémoire mais ne fait pas partie de la présente invention.

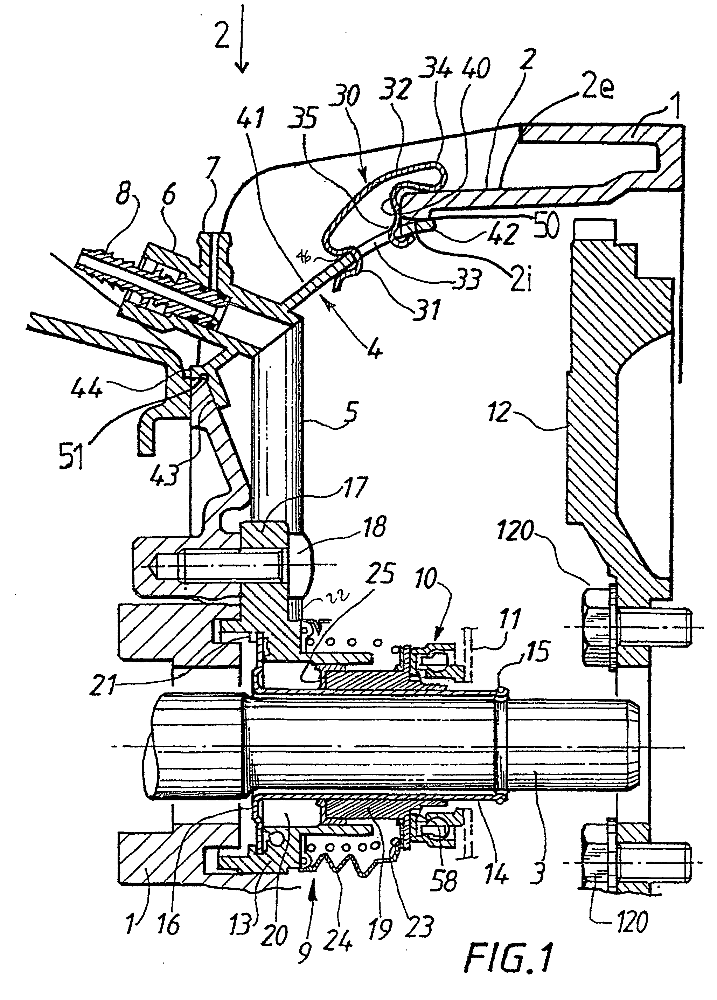

En référence à la figure 1, on définit à titre non limitatif une orientation avant et arrière respectivement à gauche et à droite, avec une orientation verticale, inférieure et supérieure correspondant respectivement au bas et au haut de la figure.

Ainsi on voit en 1 le carter de la boîte de vitesses, en 2 le capot solidaire du carter 1, en 3 l'arbre d'entrée de la boîte de vitesses, en 9 la commande hydraulique d'embrayage montée à l'intérieur du capot 2, globalement en forme de cloche, et en 4 le connecteur hydraulique selon l'invention monté sur ledit capot 2 à la faveur d'une ouverture 40, que présente le capot à cet effet.

La commande porte en saillie radiale une entrée d'alimentation 22. Le connecteur 4 est propre à se brancher sur cette entrée 22 de manière décrite ci-après et présente à l'extérieur du capot 2 un embout 6 pour raccordement du connecteur avec une canalisation venant d'un émetteur ; la commande hydraulique formant un récepteur, ici du type concentrique, traversé par l'arbre 3 d'entrée de la boîte de vitesses de manière décrite ci-après.

La commande 9 agit sur la butée de débrayage 10, ici en forme de roulement à billes, avec une bague intérieure tournante et une bague extérieure fixe.

Ainsi qu'on le sait la butée 10 agit sur le dispositif débrayeur de l'embrayage, ici l'extrémité interne des doigts d'un diaphragme 11, pour manoeuvrer l'embrayage dont on n'a représenté ici seulement que le volant d'entraînement 12 propre à être fixé par des vis 120 sur le vilebrequin du moteur du véhicule.

C'est sur ce volant 12 qu'est assemblé le bloc primaire de l'embrayage comprenant le dispositif débrayeur 11.

La butée de débrayage 10 agit ici en poussant sur le dispositif débrayeur 11 pour libérer les garnitures de friction du disque d'embrayage de manière précitée, sachant que ce disque d'embrayage comporte en son centre un moyeu cannelé intérieurement pour liaison en rotation avec l'arbre d'entrée 3 à extrémité libre cannelée.

Bien entendu la commande de l'embrayage peut être réalisée en tirant sur le dispositif débrayeur de l'embrayage.

Ainsi la commande hydraulique d'embrayage 9 peut comporter deux chambres hydrauliques de commande à volume variable, à savoir une chambre de nature hydraulique et une chambre de nature pneumatique.

Ici la commande 9 comporte une chambre de commande propre à être alimentée par un fluide de nature gazeuse ou liquide à partir de l'entrée d'alimentation 22.

Dans l'exemple de réalisation le fluide de commande est par exemple de l'huile. C'est donc par simplicité que la commande 9 est dite commande hydraulique d'embrayage.

Cette commande 9 comporte deux parties en relation de cylindre-piston, pour définition de la chambre de commande à volume variable. L'une des parties est fixe car elle est propre à être fixée sur le carter 1 de la boîte de vitesses, tandis que l'autre partie est mobile et consiste ici en un piston 19 mobile axialement à l'intérieur d'une cavité 20 délimitée par la partie fixe pour définition de la chambre de commande précitée.

Le nombre de pièces de la partie fixe dépend des applications. Cette partie pouvant être en une, deux ou trois pièces. Ici la partie fixe comporte de manière coaxiale, un corps externe 13, globalement de forme tubulaire, et un tube interne 14 concentrique. Le tube 14 est plus long axialement que le corps externe 13 et sert d'organe de support et de guidage au piston 19. Le tube 14 présente à son extrémité avant une butée de fin de course 15 pour limiter le déplacement du piston 19 et à son extrémité arrière un flasque 16 globalement d'orientation transversale. Ce flasque 16 est fixé au corps 13 au niveau de la face dorsale de celui-ci.

Cette fixation peut être réalisée à l'aide de vis, par pincement, collage, etc... Ici la fixation est réalisée par sertissage et on voit en 21, à la figure 1, l'un des secteurs de sertissage issus du corps externe 13. Le tube 14 est métallique en étant de faible épaisseur pour réduire l'encombrement radial de la commande. Ce tube 14 est traversé intérieurement par l'arbre d'entrée 3. Le corps 13 est en matière moulable, ici à base d'aluminium, en variante en matière plastique. Ceci favorise l'obtention par moulage de l'entrée d'alimentation 22.

Le corps 13 présente également des oreilles 17 trouées pour fixation de la commande 9 au carter 1, ici à l'aide de vis 18 montées dans les trous taraudés du carter 1.

Bien entendu en variante cette fixation peut être réalisée à l'aide d'autres organes de fixation tels que des rivets, boulons ou autres, le nombre d'oreilles variant en fonction des applications.

Le corps externe 13 définit avec le tube inteme 14 la cavité annulaire d'orientation axiale 20. Cette cavité est borgne en étant fermée par le flasque 16.

L'entrée d'alimentation 22 présente intérieurement un canal 26 débouchant dans ladite cavité 20 au niveau du fond 16 de celle-ci.

Le piston 19 est monté de manière étanche axialement mobile à l'intérieur de la cavité 20 et présente pour ce faire, à son extrémité arrière, un joint d'étanchéité 25.

Bien entendu un joint d'étanchéité est prévu entre le flasque 16 et le corps externe 13.

Le piston 19 peut ainsi pénétrer plus ou moins dans la cavité 20 selon que celle-ci est pressurisée ou dépressurisée. Il est ainsi créée la chambre à volume variable précitée.

Plus précisément, pour désengager l'embrayage on pressurise la cavité 20, ce qui a pour effet de déplacer le piston 19 et la butée de débrayage 10 vers la droite de la figure 1 afin de désengager l'embrayage.

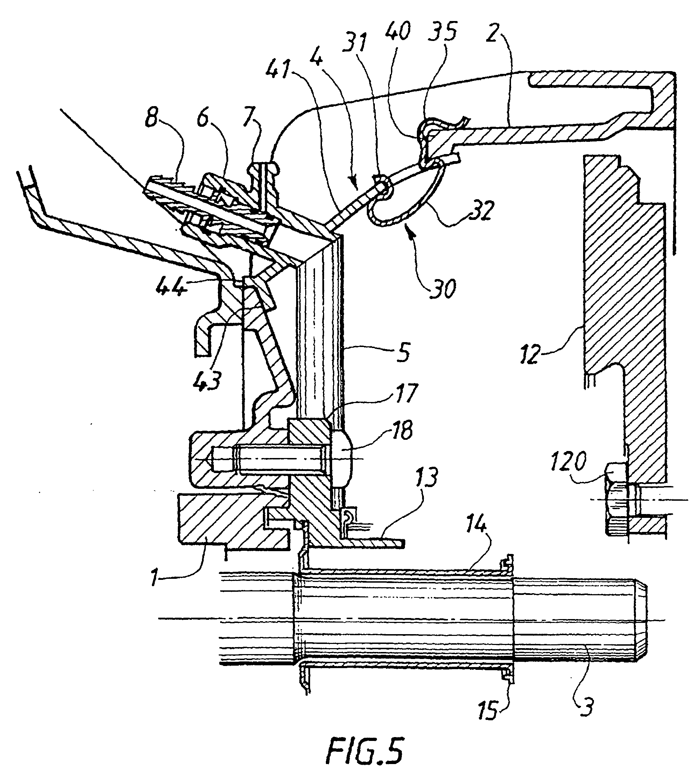

Lorsque la cavité 20 est dépressurisée le diaphragme 11 déplace la butée 10 et donc le piston 19 vers la gauche de la figure 1 en comprimant un ressort d'appui permanent 23 interposé axialement entre le corps 13 et le piston 19, ce ressort 23 étant entouré de manière connue en soi par un soufflet de protection 24 non représenté complètement dans la partie haute des figures 1 et 5.

Grâce au ressort 23 la butée 10 est en appui permanent sur le diaphragme 11.

Ici la butée 10 est attelée à l'extrémité avant du piston 19 à l'aide d'une rondelle 58 dite d'autocentrage.

Plus précisément la bague interne du roulement, constituant ladite butée 10, est profilée pour contact ponctuel avec les doigts du diaphragme 11, tandis que la bague extérieure du roulement comporte un rebord radial dirigé radialement vers l'axe de l'ensemble au contact d'un flasque non référencé, que présente le piston 19 à son extrémité avant, ledit flasque servant également à l'appui du ressort de rappel 23, pour coincement de l'extrémité du soufflet 24 entre ledit flasque et ledit ressort 23. L'autre extrémité du ressort prend appui indirectement sur un épaulement du corps externe 13, ici sur une pièce non référencée pour coincement de l'autre extrémité du soufflet 24.

La rondelle 58 a une forme globalement en forme de dièdre et est engagée à son extrémité interne dans une gorge, pratiquée dans l'extrémité avant du piston 19, et à sa périphérie externe s'appuie sur le rebord radial de la butée 10.

La butée 10 est ainsi attelée au piston en pouvant se déplacer radialement par rapport au piston, un jeu radial existant entre le rebord radial de la bague interne de la butée 10 et l'extrémité avant du piston 19.

On notera que la butée de fin de course 15 limite le déplacement du piston 19 vers l'avant, en sorte qu'il est possible de créer un sous-ensemble comprenant le piston 19 équipé de la butée 10 et le corps fixe 13,14.

Bien entendu la butée 10 peut être emmanchée sur l'extrémité avant du piston, de même le tube 14 peut être plus épais et comporter également des oreilles pour fixation de la commande 9 au carter 1.

Usuellement le capot 2 présente une trappe de visite (non visible) pour accès à l'embrayage.

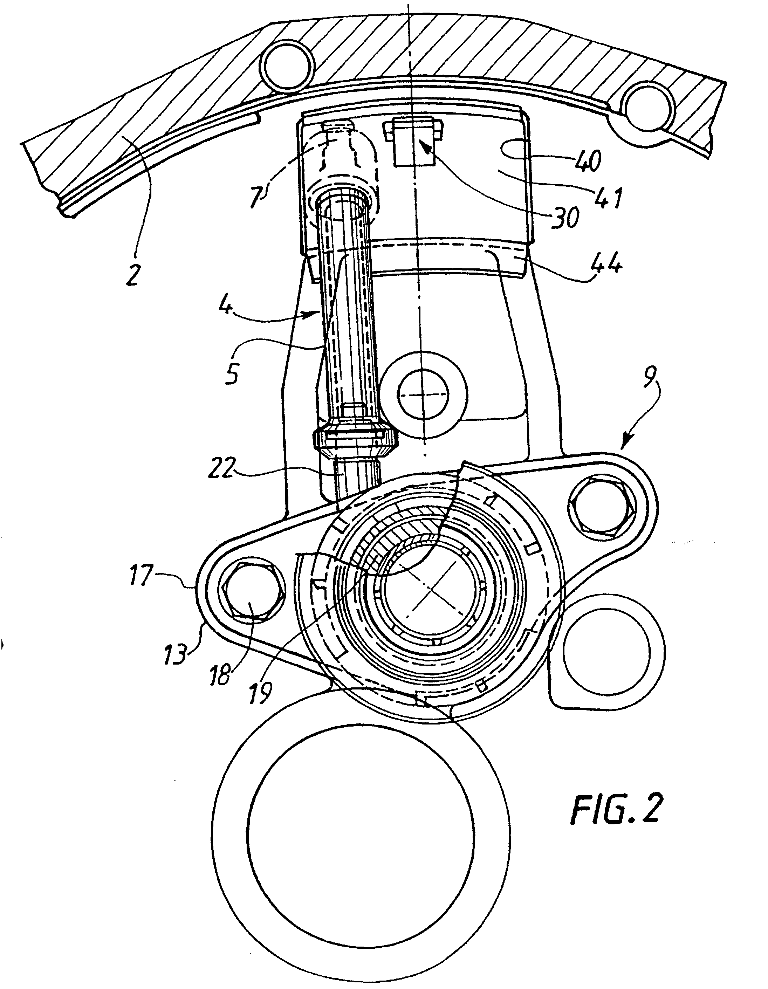

Ici le capot 2, de révolution car en forme de cloche, présente un trou 40 ici globalement de forme rectangulaire comme visible à la figure 2. Ce trou 40 est délimité latéralement par la paroi du carter 1 de la boîte de vitesses, sachant que le capot 2 est ici d'un seul tenant avec ledit carter 1 et est propre à venir se fixer à son extrémité libre sur un capot de carter que comporte de manière connue en soi le bloc moteur.

Ainsi on voit en 2, de manière non référencée, les trous de passage des boulons de fixation des deux capots.

Le trou 40 est de forme galbé avec des extrémités axiales, plus particulièrement un bord avant 51 et un bord arrière 50, décalées radialement l'une par rapport à l'autre et est propre à être recouvert, ici globalement complètement, par une plaque 41 appartenant au connecteur hydraulique 4 selon l'invention, ledit connecteur permettant de relier la commande 9 montée à l'intérieur du capot 2 à un émetteur pilotant la commande 9 et disposé à l'extérieur du capot 2. Ainsi qu'on le sait ledit émetteur est propre à être actionné par exemple par la pédale de débrayage ou un actuateur et présente une sortie reliée au connecteur 4 par une canalisation non visible.

La plaque 41 sert à la fixation du connecteur 4 sur le capot 2. Cette plaque 41 est ici d'un seul tenant (monobloc) avec un conduit d'alimentation 5, se branchant sur l'entrée d'alimentation 22 de la commande 9.

La plaque est en matière moulable telle que de la matière plastique. Cette plaque 41 est galbée.

Ainsi qu'on le voit le conduit d'alimentation 5 s'étend, suivant une caractéristique, de part et d'autre de la plaque 41 et comporte globalement une portion interne verticale reliant l'entrée 22 à la plaque 41 et une portion externe oblique s'étendant en majeure partie à l'extérieur de la plaque 41 et comportant une purge 7 et un embout 6. C'est sur cet embout 6 externe que se branche la canalisation provenant de l'émetteur associé à la commande 9.

La partie externe du conduit est donc ici inclinée par rapport à la plaque 41 galbée.

La forme du conduit 5 dépend des applications en sorte que sa portion externe n'est pas forcément inclinée. Ce conduit 5 est solidaire de la plaque en étant ici d'un seul tenant avec la plaque 41. Tout ceci est réalisé par moulage ainsi que la purge 7.

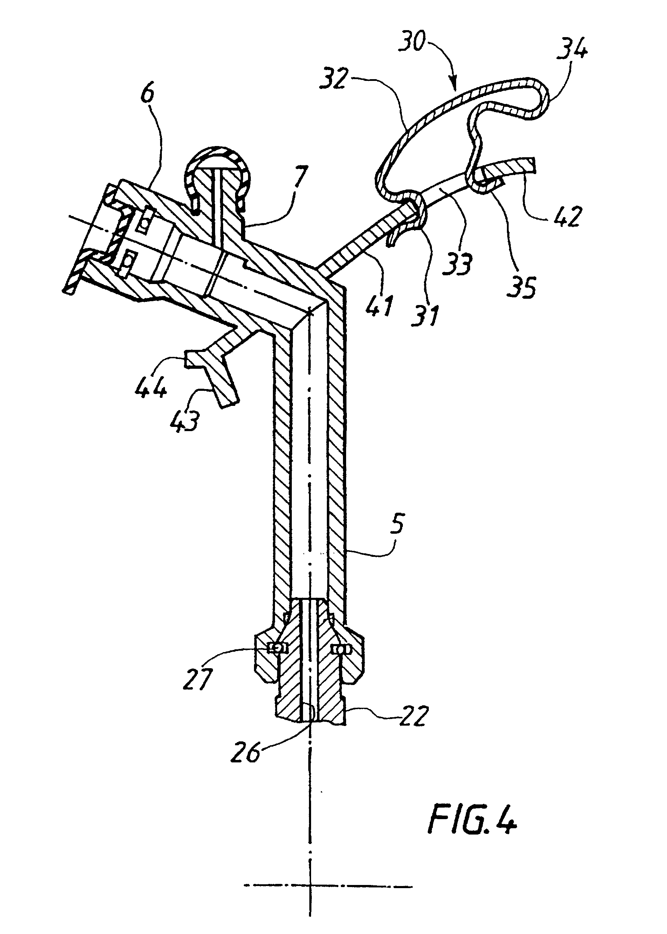

Comme mieux visible à la figure 4, l'entrée d'alimentation 22 a une tête de forme pénétrante ici globalement de forme tronconique.

Le canal 26 formé dans l'entrée 22 débouche à l'extrémité libre de ladite tête et dans la cavité 20.

La tête de l'entrée 22 présente une gorge pour réception d'une pince élastique 27, globalement en forme de U, pénétrant dans l'extrémité interne élargie du conduit 5.

Bien entendu un joint d'étanchéité non référencé est prévu pour rendre étanche ce branchement entre la tête 22 et l'extrémité interne élargie du conduit 5.

Pour ce faire, ladite extrémité présente une fente 28 (figure 4) permettant le passage des branches de la pince 27 globalement en forme de U, lesdites branches s'engageant dans la gorge de la tête de l'entrée d'alimentation 22.

L'extrémité externe, formée par l'embout 6, du conduit d'alimentation 5 en forme de tube présente également un élargissement pour montage interne d'un raccord 8 doté intérieurement d'un canal. Ce raccord 8 présente une extrémité crantée pour montage d'une canalisation souple provenant de l'émetteur.

Ainsi, en position engagée, le raccord 8 obture de manière étanche l'orifice de purge 7 que présente ledit embout 6 à l'extérieur du capot 2.

Le raccord peut occuper une position partiellement reculée dans laquelle il est maintenu par une pince élastique, du type de la pince 27, et dans laquelle le conduit d'alimentation 5 est mis en communication de manière étanche avec l'orifice de purge 7 doté intérieurement d'un canal.

Le connecteur 4 présente également ici une échancrure ou ouverture 33 formée dans sa plaque 41 pour porter l'agrafe 30. Cette échancrure 33, délimitée par un contour, sert au montage d'une agrafe déformable 30, selon l'invention, et est dotée d'une portion d'accrochage 34,35 pour coopération avec le bord avant 50 de l'ouverture 40 du capot 2.

L'agrafe 30 peut être plastiquement déformable. Ici l'agrafe est élastiquement déformable en étant métallique et de faible épaisseur. Elle est par exemple en acier à ressort.

L'agrafe 30 présente centralement une anse 32 reliant sa portion d'accrochage 34,35 à une pince d'assemblage 31 de l'agrafe 30. La pince d'assemblage 31 coopère avec un tronçon avant 46 du contour de l'échancrure 33, globalement de forme rectangulaire comme visible à la figure 2. L'agrafe 30 obture globalement l'échancrure 33. Sa pince 31 a globalement la forme d'un oméga et est donc en contact ponctuel avec les faces inférieure et supérieure de la plaque 41, la partie arrondie de la pince 31 contoumant la tranche du tronçon avant 46 du contour de l'échancrure 33. La pince 31 vient se serrer sur la plaque 41.

L'anse 32 relie la pince d'assemblage 31 à la portion d'accrochage 34,35, ici globalement également en forme de pince de fixation. Cette portion comporte une partie 35 formant pince globalement en forme de U couché, ladite pince 35 comportant d'une part, des première et seconde branches et d'autre part un fond ondulé qui relie les deux branches, et à la figure 1, une boucle 34 de raccordement de la partie 35 à l'anse 32. La partie 35 est en contact ponctuel par sa tranche interne avec la face inférieure de la plaque 41 dans le mode de réalisation de la figure 1.

Cette seconde branche inteme est inclinée et est en contact ponctuel par son extrémité libre avec la plaque 41.

Le fond du U de la partie 35 est ondulé pour contact ponctuel avec la tranche du bord arrière 50 du trou 40 du capot 2.

L'autre branche (la première branche externe) de la partie 35 est inclinée et comporte à son extrémité de raccordement avec la portion 34 une partie arrondie pour contact ponctuel avec la face supérieure 2e du capot 2 au voisinage du bord 50 du trou 40.

La plaque 41 est prolongée à l'une de ses extrémités axiales par une partie d'appui 42 en contact avec une partie en vis-à-vis de la face inférieure 2i du capot 2 au voisinage du bord 50.

Ainsi, avant montage du connecteur 4 sur le capot 2, l'agrafe 30 est en contact avec la face inférieure de la plaque 41, plus précisément en contact avec la partie d'appui 42 de celle-ci. Par sa pince 31, elle est pincée sur un tronçon avant 46 du contour de l'échancrure 33. Ce tronçon avant 46 du contour est opposé à celui délimitant la partie d'appui 42.

La partie d'appui 42 est propre à venir en contact avec la face inférieure 2i du capot 2 au voisinage du bord arrière 50 du trou 40.

Ainsi qu'on l'aura compris le montage du bloc secondaire sur le carter 1 est rapide puisque ledit bloc secondaire forme un ensemble unitaire manipulable et transportable du fait de la configuration précitée de la commande.

Ce montage se fait bien entendu avant rapprochement du bloc primaire. Il en est de même du montage du connecteur 4 et de la plaque 41.

Le montage de la plaque 41 se fait par l'intérieur du capot avec engagement de l'extrémité du conduit 5 sur l'entrée 22 et brochage à l'aide de la pince 27, tout en accrochant la plaque 41 et le connecteur 4 sur le capot 2 grâce à l'agrafe 30 dont la portion d'accrochage 34,35 vient en contact avec la face supérieure 2e du capot 2 au voisinage du bord 50 du trou 40.

La plaque 41 a globalement une forme rectangulaire en étant galbée de manière précitée pour épouser intimement la forme du capot 2.

La plaque 41 présente au niveau de l'autre bord latéral du trou 40 (celui opposé à la partie d'appui 42), c'est-à-dire à son autre extrémité axiale avant opposée à la partie d'appui 42, un épaulement 44 globalement en forme de « v » inversé, destiné à venir en appui sur le capot 2, plus précisément ici sur un bord avant 51 du trou 40 du capot 2.

Grâce à cette disposition la plaque 41 est maintenue par l'épaulement 44 et en combinaison avec l'agrafe 30 ne peut tomber, en sorte que la fixation est économique, facile, simple et rapide tout en étant sûre.

On notera que la plaque 41 présente également au voisinage de l'épaulement 44, un bord 43 propre à venir en contact intime avec le bord avant 51 du trou 40 du capot 2 du carter 1 comme mieux visible à la figure 1.

Le bord 43 est en retrait axialement par rapport à l'épaulement 44 et s'étend vers l'intérieur en direction de la commande et forme une butée axiale limitant, par coopération avec la paroi du carter 1 dans un sens, le mouvement axial de la plaque. Dans l'autre sens axial la plaque est immobilisée par l'agrafe 30.

On appréciera que l'on peut tester par avance la commande 9 à ce stade en envoyant du fluide sous pression dans le conduit 5 en forme de tuyau du fait de la présence de la butée 15 de fin de course portée par le tube 14 et qui empêche le piston 9 de sortir de la cavité 20.

Après montage du connecteur 4 et de la commande on vient rapprocher le bloc moteur par rapport à la boîte de vitesses et on procède ensuite à la fixation des capots desdits blocs sachant que l'arbre d'entrée 3 est admis à pénétrer à l'intérieur du moyeu du disque d'embrayage.

On notera que le bord 43 de la plaque 41, par coopération avec les bords longitudinaux du trou 40, ici de forme rectangulaire, du capot 2 qui relient les bords avant et arrière respectivement 51 et 50, permet d'immobiliser en rotation la plaque 41, les extrémités du bord de la plaque 41 coopérant avec les bords longitudinaux du trou 40 du capot 2.

La plaque 41 est en contact, par sa partie d'appui 42, avec la face inférieure 2i du capot 2 et, par son épaulement 44, avec la face supérieure du capot 2 au voisinage du bord avant 51 du trou 40.

Du fait de la forme en cloche du capot 2, la portion d'appui 42 est décalée radialement, c'est à dire verticalement par rapport à l'épaulement 44, la plaque 41 étant galbée de manière précitée.

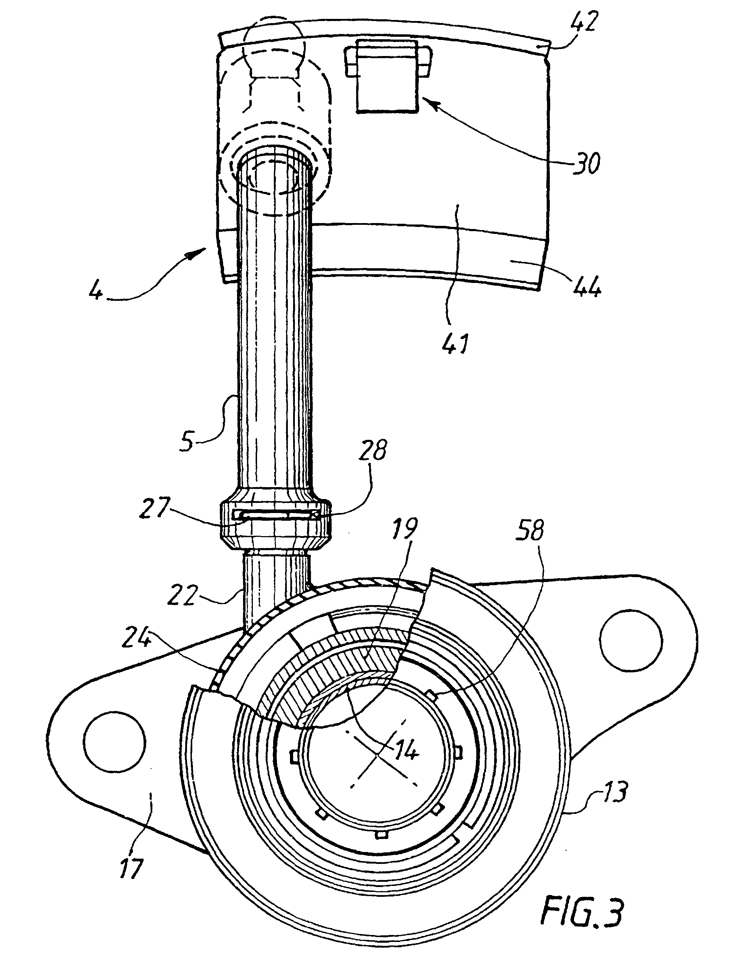

On notera que l'inclinaison de la partie externe du conduit d'alimentation 5 est telle que ladite partie puisse traverser le trou 40 du capot 2 sans interférence lorsque l'on déplace axialement, à l'intérieur du capot 2, la plaque 41 de droite à gauche dans les figures 1 à 5. Le trou 40 peut donc avoir une faible hauteur.

Ainsi ici, grâce notamment à la butée de fin de course 15, on forme par avance un sous-ensemble comportant la commande hydraulique 9 et son connecteur 4.

On peut donc tester et contrôler par avance ce sous-ensemble manipulable, transportable et imperdable. Ensuite, on enfile ce sous-ensemble dans le capot. Plus précisément, on enfile axialement le tube interne 14 sur l'arbre 3 d'entrée de la boîte de vitesses jusqu'à venue en butée des oreilles 17 et du bord 43 avec la paroi d'extrémité du carter 1, la partie exteme du conduit 5 traversant le trou 40. Durant cette phase l'agrafe 30 s'escamote car elle est élastiquement déformable.

Ensuite on procède à la fixation de la commande sur le carter 1 par les vis 18 et grâce à l'encliquetage de l'agrafe 30 sur le capot 2. Puis on introduit le raccord 8, fixé à la canalisation provenant de l'émetteur dans l'embout 6. Ceci est permis grâce à l'agrafe 30 qui peut se déformer et s'escamoter.

Le montage final sur chaîne est donc rapide et se fait simplement par enfilage axial.

Il en résulte que le conduit 5 peut être raccordée à l'entrée d'alimentation 22 par tout type de raccord, par exemple des raccords à vis.

Bien entendu, l'agrafe 30 peut ne pas être montée par avance sur la plaque 41 et être mise en place après venue en butée du bord 43 sur la paroi intérieure du bord avant 51 du trou 40 du carter 1, de préférence avant branchement du raccord 18 de la canalisation de sortie de l'émetteur.

Bien entendu la présente invention n'est pas limitée à l'exemple de réalisation décrit. Ainsi, alors que dans les figures précédentes l'agrafe 30 présentait une anse 32 s'étendant à l'extérieur du capot 2, on peut inverser les structures en sorte que l'anse 32 s'étend à l'intérieur du capot 2 comme mieux visible à la figure 5.

Ainsi dans cette figure la partie 34 est supprimée, l'extrémité de la première branche externe de la pince 35 présentant une partie bombée pour contact ponctuel avec la face supérieure 2e du capot 2 au voisinage du bord arrière 50 du trou 40.

Dans tous les cas la partie 35 forme une pince de fixation en forme de U couché, ladite pince 35 comportant d'une part, des première et seconde branches et d'autre part, un fond ondulé qui relie les deux branches et qui est en contact ponctuel avec la tranche du bord arrière 50 du trou 40 du capot 2, lesdites branches étant inclinées en se rapprochant l'une de l'autre.

Ces première et seconde branches ont une longueur différente, la première branche exteme destinée à venir en contact avec la face supérieure 2e du capot 2 au voisinage du bord arrière 50 du trou 40, est plus longue axialement et donc plus souple que la seconde branche inteme, en contact avec la partie d'appui 42 de la plaque 41 au voisinage du contour de l'échancrure 33.

A la figure 1, la partie 34 favorise le montage sur le capot 2 en évitant tout coincement. A la figure 5, ce coincement est évité par l'extrémité bombée en forme de bec de la première branche externe de la pince de fixation 35. Le fond de la pince 35 présente centralement un fond ondulé qui relie les deux branches et qui est en contact ponctuel avec la tranche du bord arrière 50 du trou 40 du capot 2. L'anse 32 favorise la ventilation. L'échancrure 33 peut être borgne comme visible à la figure 5, la pince 35 étant en contact par sa seconde branche interne avec la face inférieure 2i du capot 2 au voisinage du bord arrière 50 du trou 40.

La partie d'appui 42 s'étend au contact également de la face inférieure 2i du capot 2.

On notera que le capot 2 est épaissi au niveau de sa zone de contact avec la pince de fixation 35 de l'agrafe 30 formant clip de fixation et que l'épaulement d'appui 44 et la partie d'appui 42 sont respectivement en contact avec la face supérieure du bord avant 51 du trou 40 et la face inférieure 2i du capot 2 au voisinage du bord arrière 50 du trou 40, ce qui permet de monter la plaque 41 de l'intérieur du capot 2 et d'obtenir un bon maintien de la plaque 41.

L'agrafe 30 maintient la plaque 41 au contact du capot 2 et permet une fixation par encliquetage de la plaque 41 avec le capot 2.

Bien entendu, la plaque 41 peut être métallique et le conduit d'alimentation 5 peut être fixé par soudage ou mécaniquement à la plaque 41 présentant pour ce faire une collerette traversée par le conduit et permettant la fixation par sertissage du conduit 5 à la plaque 41.

De même le conduit 5 solidaire de la plaque 41 peut présenter une embase, par exemple avec deux oreilles, pour fixation du conduit 5 sur la tête 22 alors taraudée pour réception de vis traversant les oreilles de l'embase d'extrémité du conduit avec interposition d'un joint entre l'embase et la tête.

La butée de débrayage peut avoir une autre forme et comporter une membrane souple déroulable et coopérant avec le carter de la boîte de vitesses.

Le conduit 5 solidaire de la plaque peut présenter à son extrémité un retour d'orientation axiale pour montage axial sur l'entrée d'alimentation et le roulement de la butée de débrayage ayant une taille réduite en étant monté à l'intérieur du piston.

En variante, le conduit 5 peut traverser la plaque.

## Revendications

1. Connecteur hydraulique, pour commande hydraulique d'embrayage (9) du type comportant une entrée d'alimentation (22) d'une chambre de commande (20,19) qui est montée à l'intérieur d'un capot (2), ledit connecteur comportant :
- d'une part, une plaque (41) pour sa fixation par des organes de fixation (30) sur le capot (2) et pour le recouvrement au moins en majeure partie d'un trou (40) que présente le capot (2) pour accès à l'entrée d'alimentation (22) et qui est délimité par un bord arrière (50) ; et
- d'autre part, un conduit d'alimentation (5) porté par ladite plaque (41) pour raccordement de l'entrée d'alimentation (22) de ladite commande (9) à un émetteur pilotant celle-ci,
les organes de fixation comportant une agrafe déformable (30) que porte la plaque (41) pour former un sous-ensemble et qui est dotée d'une portion d'accrochage (34,35) pour coopération avec le bord arrière (50) du trou (40) du capot (2), **caractérisé en ce que** la plaque (41) présente, pour l'assemblage de l'agrafe (30), une échancrure (33) qui est délimitée par un contour, tel qu'un contour de forme rectangulaire.

2. Connecteur selon la revendication 1, **caractérisé en ce que** l'agrafe (30) présente une pince d'assemblage (31) pour assemblage de l'agrafe (30) sur un tronçon avant (46) du contour de l'échancrure (33).

3. Connecteur selon la revendication 2, **caractérisé en ce que** l'agrafe (30) comporte une anse (32) reliant la pince d'assemblage (31) à la portion d'accrochage (34,35).

4. Connecteur selon la revendication 3, **caractérisé en ce que** la portion d'accrochage comporte une pince de fixation (35), globalement en forme de U couché, ladite pince (35) comportant d'une part, des première et seconde branches et d'autre part un fond ondulé qui relie les deux branches et qui est en contact ponctuel avec la tranche du bord arrière (50) du trou (40) du capot (2).

5. Connecteur selon la revendication 4, **caractérisé en ce que** ladite pince de fixation (35) coopère par sa première branche avec la face supérieure (2e) du capot (2) au voisinage du bord (50) du trou (40).

6. Connecteur selon la revendication 5, **caractérisé en ce que** l'anse (32) de l'agrafe (30) s'étend à l'extérieur du capot (2), la seconde branche de la pince de fixation (35) étant en contact avec une partie d'appui (42) de la plaque (41) au voisinage du contour de l'échancrure (33), ladite partie d'appui (42) étant propre à venir en contact avec la face inférieure (2i) du capot (2) au voisinage du bord arrière (50) du trou (40).

7. Connecteur selon la revendication 5, **caractérisé en ce que** l'anse (32) de l'agrafe (30) s'étend à l'intérieur du capot (2) et est propre à coopérer, par la seconde branche de sa pince de fixation (35), avec la face inférieure (2i) du capot (2) au voisinage du bord arrière (50) du trou (40).

8. Connecteur selon la revendication 1, **caractérisé en ce que** le conduit d'alimentation (5) est solidaire de la plaque (41).

9. Connecteur selon la revendication 8, **caractérisé en ce que** le conduit d'alimentation (5) est monobloc avec la plaque (41) et étant réalisé avec celle-ci par moulage.

10. Connecteur selon la revendication 8, **caractérisé en ce que** le conduit d'alimentation (5) est en deux parties s'étendant de part et d'autre de la plaque (41), à savoir une partie interne s'étendant à l'intérieur du capot (2) pour venir en prise avec une tête de l'entrée d'alimentation (22) et une partie externe s'étendant en majeure partie à l'extérieur du capot (2).

11. Connecteur selon la revendication 10, **caractérisé en ce que** la partie externe comporte un orifice de purge (7) s'étendant à l'extérieur du capot (2).

12. Connecteur selon la revendication 11, **caractérisé en ce que** l'extrémité libre de la partie externe du conduit d'alimentation (5) est élargie pour montage d'un raccord (8) propre à obturer l'orifice de purge (7) et à ouvrir ledit orifice (7).

13. Connecteur selon la revendication 10, **caractérisé en ce que** l'extrémité de la partie interne du conduit d'alimentation (5) est élargie pour coopérer avec une tête de forme pénétrante de l'entrée d'alimentation (22).

14. Connecteur selon la revendication 13, **caractérisé en ce que** l'extrémité de la partie interne du conduit d'alimentation (5) est raccordée à la tête de l'entrée d'alimentation (22) par une pince (27).

15. Connecteur selon la revendication 10, **caractérisé en ce que** la partie externe du conduit d'alimentation (5) est inclinée par rapport à la plaque (41) qui comporte des extrémités axiales avant et arrière (44, 42) décalées verticalement l'une par rapport à l'autre, en sorte que la plaque (41 )est adaptée à traverser axialement sans interférence le trou (40) du capot (2) de forme galbée..

16. Connecteur selon la revendication 15, **caractérisé en ce que** la plaque (41) présente, à son extrémité axiale arrière, une partie d'appui (42) propre à venir en contact avec une partie en vis-à-vis de la face inférieure (2i) du capot (2) au voisinage du bord (50) du capot (2) et, à son extrémité axiale avant, un épaulement (44) globalement en forme de « V » inversé, propre à venir en contact avec un bord avant (51) du trou (40) du capot (2).

## Patentansprüche

1. Hydraulischer Verbinder für eine hydraulische Kupplungsbetätigung (9) mit einem Zuleitungseinlaß (22) zur Befüllung einer Betätigungskammer (20, 19), die im Innern einer Abdeckung (2) angebracht ist,
wobei der besagte Verbinder folgendes umfaßt:
- einerseits eine Platte (41) für seine Befestigung durch Befestigungsorgane (30) an der Abdeckung (2) und für die wenigstens zum größten Teil erfolgende Bedeckung eines Lochs (40), das die Abdeckung (2) für den Zugang zum Zuleitungseinlaß (22) aufweist und das durch einen hinteren Rand (50) begrenzt wird, und
- andererseits eine an der besagten Platte (41) angebrachte Zuleitung (5) für den Anschluß des Zuleitungseinlasses (22) der besagten Betätigung (9) an eine diese steuernde Gebervorrichtung,
wobei die Befestigungsorgane eine verformbare Klammer (30) umfassen, welche die Platte (41) trägt, um eine Untergruppe zu bilden, und die mit einem Einhakabschnitt (34, 35) für das Zusammenwirken mit dem hinteren Rand (50) des Lochs (40) der Abdeckung (2) versehen ist,
**dadurch gekennzeichnet,**
**daß** die Platte (41) für die Anbringung der Klammer (30) eine Aussparung (33) aufweist, die durch einen Umriß, etwa einen Umriß mit rechteckiger Form, begrenzt ist.

2. Verbinder nach Anspruch 1, **dadurch gekennzeichnet, daß** die Klammer (30) eine Verbindungsklemme (31) für die Anbringung der Klammer (30) an einem vorderen Teilstück (46) des Umrisses der Aussparung (33) aufweist.

3. Verbinder nach Anspruch 2, **dadurch gekennzeichnet, daß** die Klammer (30) einen Bügel (32) umfaßt, der die Verbindungsklemme (31) mit dem Einhakabschnitt (34, 35) verbindet.

4. Verbinder nach Anspruch 3, **dadurch gekennzeichnet, daß** der Einhakabschnitt eine Befestigungsklemme (35), insgesamt mit der Form eines liegenden U, umfaßt, wobei die besagte Befestigungsklemme (35) einerseits erste und zweite Schenkel und andererseits einen gewellten Boden umfaßt, der die beiden Schenkel verbindet und der sich in punktuellem Kontakt mit der Kante des hinteren Rands (50) des Lochs (40) der Abdeckung (2) befindet.

5. Verbinder nach Anspruch 4, **dadurch gekennzeichnet, daß** die besagte Befestigungsklemme (35) durch ihren ersten Schenkel mit der Oberseite (2e) der Abdeckung (2) in der Nähe des Rands (50) des Lochs (40) der Abdeckung (2) zusammenwirkt.

6. Verbinder nach Anspruch 5, **dadurch gekennzeichnet, daß** sich der Bügel (32) der Klammer (30) außerhalb der Abdeckung (2) erstreckt, wobei sich der zweite Schenkel der Befestigungsklemme (35) mit einem Auflageteil (42) der Platte (41) in der Nähe des Umrisses der Aussparung (33) in Kontakt befindet, wobei der besagte Auflageteil (42) mit der Unterseite (2i) der Abdeckung (2) in der Nähe des hinteren Rands (50) des Lochs (40) in Kontakt kommen kann.

7. Verbinder nach Anspruch 5, **dadurch gekennzeichnet, daß** sich der Bügel (32) der Klammer (30) im Innern der Abdeckung (2) erstreckt und durch den zweiten Schenkel ihrer Befestigungsklemme (35) mit der Unterseite (2i) der Abdeckung (2) in der Nähe des hinteren Rands (50) des Lochs (40) zusammenwirken kann.

8. Verbinder nach Anspruch 1, **dadurch gekennzeichnet, daß** die Zuleitung (5) fest mit der Platte (41) verbunden ist.

9. Verbinder nach Anspruch 8, **dadurch gekennzeichnet, daß** die Zuleitung (5) einteilig mit der Platte (41) ausgeführt ist, wobei sie einstückig an dieser angeformt ist.

10. Verbinder nach Anspruch 8, **dadurch gekennzeichnet, daß** die Zuleitung (5) aus zwei Teilen besteht, die sich beiderseits der Platte (41) erstrecken, und zwar aus einem inneren Teil, der sich im Innern der Abdeckung (2) erstreckt, um mit einem Kopf des Zuleitungseinlasses (22) in Eingriff zu kommen, und aus einem äußeren Teil, der sich zum größten Teil außerhalb der Abdeckung (2) erstreckt.

11. Verbinder nach Anspruch 10, **dadurch gekennzeichnet, daß** der äußere Teil eine Auslaßöffnung (7) umfaßt, die sich außerhalb der Abdeckung (2) erstreckt.

12. Verbinder nach Anspruch 11, **dadurch gekennzeichnet, daß** das freie Ende des äußeren Teils der Zuleitung (5) für die Anbringung eines Anschlusses (8) erweitert ist, der die Auslaßöffnung (7) verschließen und die besagte Öffnung (7) öffnen kann.

13. Verbinder nach Anspruch 10, **dadurch gekennzeichnet, daß** das Ende des inneren Teils der Zuleitung (5) erweitert ist, um mit einem Kopf mit durchdringender Form des Zuleitungseinlasses (22) zusammenzuwirken.

14. Verbinder nach Anspruch 13, **dadurch gekennzeichnet, daß** das Ende des inneren Teils der Zuleitung (5) durch eine Klemme (27) an den Kopf des Zuleitungseinlasses (22) angeschlossen ist.

15. Verbinder nach Anspruch 10, **dadurch gekennzeichnet, daß** der äußere Teil der Zuleitung (5) im Verhältnis zur Platte (41) geneigt ist, die vordere und hintere axiale Enden (44, 42) umfaßt, die im Verhältnis zueinander vertikal versetzt sind, so daß die Platte (41) ohne Überschneidung axial durch das Loch (40) der Abdeckung (2) mit gewölbter Form hindurchgehen kann.

16. Verbinder nach Anspruch 15, **dadurch gekennzeichnet, daß** die Platte (41) an ihrem hinteren axialen Ende einen Auflageteil (42), der mit einem gegenüberliegenden Teil der Unterseite (2i) der Abdeckung (2) in der Nähe des Rands (50) der Abdeckung (2) in Kontakt kommen kann, und an ihrem vorderen axialen Teil eine Schulter (44), insgesamt mit der Form eines umgekehrten "V", aufweist, die mit einem vorderen Rand (51) des Lochs (40) der Abdeckung (2) in Kontakt kommen kann.

## Claims

1. A hydraulic connector for a control system (9) of a hydraulic clutch, of the type including a feed inlet (22) for a control chamber (20, 19) which is mounted inside a cap member (2), the said connector comprising:
- on the one hand, a plate (41) for fixing it on the cap member (2) by means of fastening members (30), and for overlying, at least partly, a hole (40) which is formed in the cog (2) for access to the feed inlet (22) and which is delimited by a rear edge (50); and
- on the other hand, a feed duct (5) carried by the said plate (41) for connecting the feed inlet (22) of the said control system (9) to an emitter governing the latter,
the fastening members comprising a deformable clip (30) which is carried by the plate (41) so as to constitute a sub-assembly, and which has a hooking portion (34, 35) for co-operating with the rear edge (50) of the hole (40) in the cap member (2), **characterised in that** the plate (41) has, for fitting of the clip (30), a slot (33) which is delimited by a contour such as a rectangular contour.

2. A connector according to Claim 1, **characterised in that** the clip (30) has an anchor claw (31) for attachment of the clip (30) on a front portion (46) of the contour of the slot (33).

3. A connector according to Claim 2, **characterised in that** the clip (30) has a loop portion (32) joining the anchor claw (31) to the hooking portion (34, 35).

4. A connector according to Claim 3, **characterised in that** the hooking portion includes a securing claw (35), generally in the form of a U on its side, the said claw (35) comprising, firstly, first and second branches, and secondly, a corrugated base portion which joins the two branches together, and which is in point contact with the said portion of the rear edge (50) of the hole (40) in the cap member (2).

5. A connector according to Claim 4, **characterised in that** the said securing claw (35) is in cooperation through its first branch with the upper face (2e) of the cap member (2) in the vicinity of the edge (50) of the hole (40).

6. A connector according to Claim 5, **characterised in that** the loop portion (32) of the clip (30) extends outside the cap member (2), the second branch of the securing claw (35) being in contact with an engagement portion (42) of the plate (41) in the vicinity of the contour of the slot (33), the said engagement portion (42) being adapted to come into contact with the lower face (2i) of the cap member (2) in the vicinity of the rear edge (50) of the hole (40).

7. A connector according to Claim 5, **characterised in that** the loop portion (32) of the clip (30) extends inside the cap member (2) and is adapted to cooperate, through the second branch of its securing claw (35), with the lower face (2i) of the cap member (2) in the vicinity of the rear edge (50) of the hole (40).

8. A connector according to Claim 1, **characterised in that** the feed duct (5) is fixed with respect to the plate (41).

9. A connector according to Claim 8, **characterised in that** the feed duct (5) is integral with the plate (41), with which it is formed by moulding.

10. A connector according to Claim 8, **characterised in that** the feed duct (5) is in two parts disposed on either side of the plate (41), namely an inner part extending inside the cap member (2) for engagement with a head of the feed inlet (22), and an outer part disposed mainly on the outside of the cap member (2).

11. A connector according to Claim 10, **characterised in that** the outer part includes a purge orifice (7) which extends outside the cap member (2).

12. A connector according to Claim 11, **characterised in that** the free end of the outer part of the feed duct (5) is widened for mounting therein of a connecting member (8) which is adapted to obturate the purge orifice (7) and to open the said orifice (7).

13. A connector according to Claim 10, **characterised in that** the end of the inner part of the feed duct (5) is widened for cooperation with a head, of penetrating form, of the feed inlet (22).

14. A connector according to Claim 13, **characterised in that** the end of the inner end of the feed duct (5) is connected to the head of the feed inlet (22) by means of a spring clip (27).

15. A connector according to Claim 10, **characterised in that** the outer part of the feed duct (5) is inclined with respect to the plate (41), which has front and rear axial ends (44, 42) offset vertically from each other, in such a way that the plate (41) is adapted to pass axially, and without any clearance, through the hole (40) in the profiled cap member (2).

16. A connector according to Claim 15, **characterised in that** the plate (41) has, at its rear axial end, an engagement portion (42) arranged to come into contact with a facing portion of the lower face (2i) of the cap member (2), and, at its front axial end, a shoulder (44), generally in the form of an inverted V, which is arranged to come into contact with a front edge (51) of the hole (40) in the cap member (2).
